# EUROPEAN PATENT SPECIFICATION

(11) **EP 0 895 249 B1**
(45) Date of publication and mention of the grant of the patent: **05.12.2001**
(21) Application number: 98305912.2
(22) Date of filing: 24.07.1998
(51) Int. Cl.: B65D 43/06, G21F 5/008, G21F 5/12

(54) **Remote-controlled-lid type pneumatic vessel for powder**
Pneumatischer Behälter für Pulvermaterial mit ferngesteuertem Deckel
Récipient pneumatique pour matière pulverulente avec couvercle commandé à distance

(30) Priority: 28.07.1997 JP 21551997
(43) Date of publication of application: 03.02.1999
(73) Proprietor: JAPAN NUCLEAR CYCLE DEVELOPMENT INSTITUTE, Naka-gun Ibaraki-ken (JP)
(72) Inventor: Minami, Akinori c/o Kokugo Kabushiki Kaisha, Chiyoda-ku Tokyo (JP); Shibata, Teruo, Ibaraki-ken (JP); Chiba, Masahiko, Naka-gun, Ibaraki-ken (JP); Sugawara, Kazuaki, Naka-gun, Ibaraki-ken (JP)
(74) Representative: Charlton, Peter John

(56) References cited:
- EP-A- 0 100 989
- EP-A- 0 407 784
- DE-A- 3 516 837
- DE-A- 3 545 494
- DE-U- 8 619 340
- US-A- 3 840 155
- US-A- 4 347 943
- US-A- 5 727 707

## Description

The present invention relates to a remote-controlled-lid type pneumatic vessel for powder used to carry a powdered nuclear fuel substance to be handled under a confined state or powder requiring scattering prevention by a pneumatic system. It is possible to store any of grains, tablets, pellets, slurries, and liquid in addition to powder.

In the process for manufacturing nuclear fuel pellets, it is necessary to perform various analytic inspections in the middle of the manufacturing process in order to confirm the property of a powdered nuclear fuel substance serving as a raw material.

It is necessary to handle the nuclear fuel substance which must undergo analytic inspections under a confined state. Therefore, manufacturing equipment and analyzing equipment are connected with each other by a stainless-steel tube and the substance is carried in the tube by the pneumatic system. That is, the powdered nuclear fuel substance is stored in a pneumatic vessel and this vessel is carried in the stainless-steel tube by using an air pressure difference.

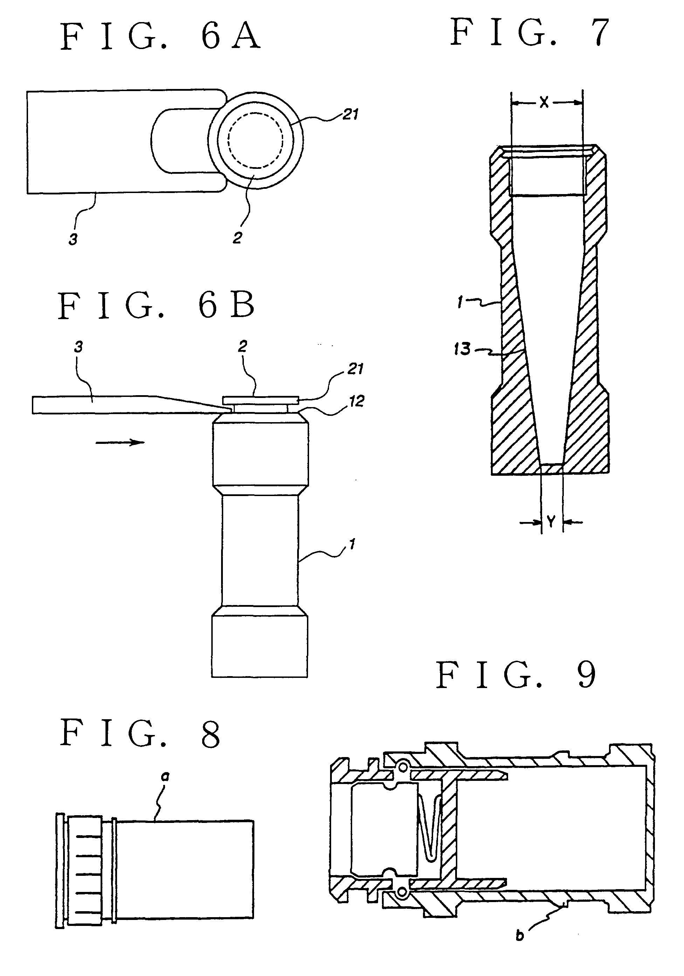

As shown in Fig. 8, a conventional pneumatic vessel body "a" uses a stainless-steel vessel. In the case of the pneumatic vessel body "a", the lid is operated through remote control in order to reduce radioactive exposure, and thus the lid can be easily removed through remote control. Therefore, the pneumatic vessel body "a" cannot be pneumatically carried independently, so that the vessel body "a" is pneumatically carried while stored in a strong aluminum outer vessel "b" having the sectional structure shown in Fig. 9.

In the conventional pneumatic vessel described above, the following problems occur.
(1) Because the lid is constituted so as to be easily removed, it is impossible to pneumatically carry only the pneumatic vessel and therefore, the outer vessel is required.
(2) Because the outer vessel uses a complex locking mechanism so that the lid is not removed while pneumatically carried, the lid of the outer vessel cannot be operated through remote control but it must be manually operated. Therefore, when storing the pneumatic vessel body in the outer vessel, the operation efficiency is lowered because it is necessary to protect an operator from radiation exposure. Moreover, the locking mechanism may not be securely locked when power is caught in the mechanism. In this case, the operation efficiency is further lowered.
(3) Because the pneumatic vessel is made of remote-controllable stainless steel and moreover, the identification number of the vessel is formed with engraving, the price including its machining cost increases.
(4) The pneumatic vessel made of stainless steel is recycled by cleaning it because the volume reduction of the vessel required for radioactive waste disposal is not available. However, in the case of insufficient cleaning, different types of nuclear fuel substances are mixed to cause an analysis error.
(5) Moreover, because the identification number of the outer vessel made of aluminum is formed with engraving similarly to the case of the pneumatic vessel body, the price of the outer vessel is also increased.

It is an object of the present invention to provide a remote-controlled-lid type pneumatic vessel for powder which can be used as a single unit and is superior to a conventional double-structure pneumatic vessel in airtightness, whose lid can be operated through remote control, which is not recycled after being cleaned because it is made of an inexpensive material, and which can be incinerated for volume reduction as a radioactive waste.

According to the present invention, there is provided a remote-controlled-lid type pneumatic vessel for powder comprising a vessel provided with an aperture for storing powder and a lid to be fitted in the aperture; wherein an upper edge extending in the circumferential direction, a fixed ring for holding the lid at a predetermined position of the vessel, and at lease one non-slip ring contacting the inside wall of the aperture are formed in that order on the outer-peripheral wall of the lid starting at the top of the outer-peripheral wall thereof, a catching groove fitted to the fixed ring of the lid is formed on the inside wall of the aperture of the vessel, and a predetermined clearance is formed between the end edge of the aperture and the upper edge of the lid while the fixed ring of the lid is fitted to the catching groove.

Preferred embodiments of the present invention will now be described by way of example with reference to the accompanying drawings, in which:
Figure 1 is a perspective view showing the appearance of the remote-controlled-lid type pneumatic vessel for powder of an embodiment of the present invention;
Figure 2 is a local sectional view showing the structure of a lid;
Figure 3 is a local sectional view showing the structure of a vessel;
Figure 4 is a local sectional view showing the structure of a vessel to which a lid is fitted;
Figure 5 is an enlarged sectional view of the aperture of a vessel to which a lid is fitted;
Figures 6A and 6B are illustrations for explaining a method for removing a lid;
Figure 7 is a sectional view for explaining the shape of the inside wall of a vessel;
Figure 8 is a front view showing the structure of a conventional pneumatic vessel body; and
Figure 9 is a sectional view showing the structure of a conventional outer vessel.

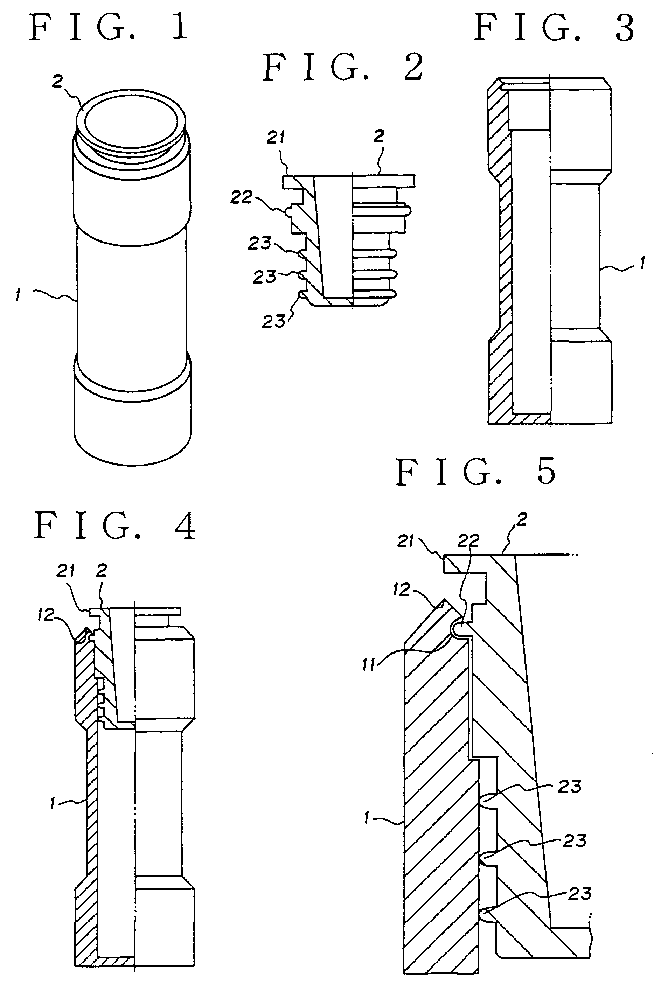

Referring to Figs. 1 to 5, a vessel 1 and a lid 2 are both made of a flammable material such as, for example, reinforced polyethylene. Therefore, the pneumatic vessel 1 becomes inexpensive compared to a conventional one made of stainless-steel and it can be incinerated for volume reduction as a radioactive waste. Moreover, a vessel identification number can be inexpensively provided to the pneumatic vessel by a label.

As shown in Fig. 2, an upper edge 21 extending in the circumferential direction, a fixed ring 22, and three non-slip rings 23 are formed on the outer-peripheral wall of the lid 2 in that order starting at the top thereof.

Moreover, as shown in Fig. 5, a catching groove 11 fitted to the fixed ring 22 of the lid 2 is provided in the inside wall of the aperture of the vessel 1 and the position of the catching groove 11 is selected so that a predetermined clearance is formed between the end edge 12 of the aperture of the vessel 1 and the upper edge 21 of the lid 2 while the fixed ring 22 of the lid 2 is fitted to the catching groove 11. Moreover, the inside wall of the vessel 1 is formed so that the inside diameter of the vessel 1 gradually decreases toward the bottom and the lower non-slip ring 23 more strongly contacts the inside wall of the aperture of the vessel 1.

In the case of this embodiment constituted as described above, by storing powder in the vessel 1 and thereafter inserting the lid 2 into the aperture of the vessel 1, the lid 2 moves downward while the non-slip rings 23 of the lid 2 are pressed against the inside wall of the aperture. Moreover, when the lid 2 moves downward by a predetermined distance, the fixed ring 22 of the lid 2 is fitted to the catching groove 11 of the aperture and the lid 2 is fixed to the vessel 1.

While the lid 2 is fixed, the fixed ring 22 is fitted to the catching groove 11 and the non-slip rings 23 are pressed against the inside wall of the aperture. Therefore, the powder in the vessel 1 is kept confined and the lid 2 can be also securely fixed to the vessel 1. Therefore, the lid 2 will not be removed from the vessel 1 while the vessel 1 is pneumatically carried.

Thus, by using the pneumatic vessel of the present invention, it is possible to perform pneumatic carrying only by the pneumatic vessel in the direction of the front or rear side without using a conventional outer vessel.

Then, a method for opening the lid of the pneumatic vessel is described below. As previously described, while the lid 2 is fixed to the vessel 1 (while the lid 2 is plugged), the predetermined clearance is formed between the end edge 12 of the aperture of the vessel 1 and the upper edge 21 of the lid 2 as shown in Fig. 5. Therefore, to remove the lid 2, it is possible to easily remove the lid 2 even through remote control by parallelly inserting a jig 3 between the upper end 21 of the lid 2 and the end edge 12 of the aperture of the vessel 1 as shown in Figs. 6A and 6B. The front top face of the jig 3 is tapered toward the tip end thereof. Fig. 6A is a drawing viewed from the upper side and Fig. 6B is a drawing viewed from the lateral side.

As previously described, the inside wall of the vessel 1 is formed so that the inside diameter of the vessel 1 decreases gradually toward the bottom. More specifically, as shown in Fig. 7, because the inside diameter Y of the bottom is made smaller than the inside diameter X of a portion near the aperture so that the tilt angle of the inside wall 13 of the vessel 1 increases, it is possible to easily take out the powder from the vessel 1 without significantly tilting the vessel 1.

As described above, the present invention makes it possible to obtain the following specific advantages.
(1) Because a lid can be operated through remote control and moreover, the lid can be securely fixed, it is possible to pneumatically carry a nuclear fuel substance using only a pneumatic vessel without using an outer vessel.
(2) Because no outer vessel is used, it is unnecessary to manually store a pneumatic vessel in an outer vessel and therefore, the operation efficiency is improved and radiation exposure can be reduced.
(3) By using reinforced polyethylene as the material of a vessel and a lid and identifying a vessel number by a label, it is possible to reduce the vessel cost.
(4) Because the material of a pneumatic vessel may be inflammable such as reinforced polyethylene, it is possible to incinerate a radioactive waste to reduce the volume of the waste without recycling the waste after cleaning.
(5) As an object to be put in a pneumatic vessel, any of grains, tablets, pellets, slurries, and liquid in addition to powder can be used. Moreover, the pneumatic vessel can be used as a sample vessel.

## Claims

1. A remote-controlled-lid type pneumatic vessel for powder comprising a vessel (1) provided with an aperture for storing powder and a lid (2) to be fitted in the aperture; **characterised in that**
an upper edge (21) extending in the circumferential direction, a fixed ring (22) for holding the lid at a predetermined position of the vessel, and at least one non-slip ring (23) contacting the inside wall of the aperture are formed **in that** order on the outer-peripheral wall of the lid (2) starting at the top of the outer-peripheral wall thereof,
a catching groove (11) fitted to the fixed ring (22) of the lid is formed on the inside wall of the aperture of the vessel (1), and
a predetermined clearance is formed between the end edge (12) of the aperture and the upper edge (21) of the lid while the fixed ring (22) of the lid is fitted to the catching groove (11).

2. The remote-controlled-lid type pneumatic vessel for powder according to claim 1, wherein the inside wall of the vessel (1) is formed so that the inside diameter of the vessel gradually decreases toward the bottom of the vessel.

3. The remote-controlled-lid type pneumatic vessel for powder according to claim 2, wherein a plurality of the non-slip rings (23) are formed in the longitudinal direction of the lid (2) so that the lower non-slip ring more contacts the inside wall of the vessel (1).

4. The remote-controlled-lid type pneumatic vessel for powder according to claim 1, wherein the vessel (1) and the lid (2) are both made of an inflammable material so that they can be incinerated.

## Patentansprüche

1. Pneumatischer Behälter für Pulver mit ferngesteuertem Deckel umfassend einen Behälter(1), der mit einer Öffnung zum Aufnehmen von Pulver und einem in die Öffnung einzusetzenden Deckel (2) versehen ist, **dadurch gekennzeichnet, dass**
eine sich in Umfangsrichtung erstreckende obere Kante (21), ein fester Ring (22) zum Halten des Deckels in einer bestimmten Position des Behälters und mindestens ein verschiebefester Ring (23), der an der Innenwand der Öffnung anliegt, ausgehend vom oberen Ende seiner Aussenumfangswand in dieser Reihenfolge auf der Aussenumfangswand des Deckels (2) ausgebildet sind,
eine am festen Ring (22) des Deckels angebrachte Eingriffsrille (11) auf der Innenwand der Öffnung des Behälters (1) ausgebildet ist, und
ein bestimmtes Spiel zwischen der Endkante (12) der Öffnung und der Oberkante (21) des Deckels ausgebildet ist, während der feste Ring (22) des Deckels an der Eingriffsrille (11) angebracht ist.

2. Pneumatischer Behälter für Pulver mit ferngesteuertem Deckel nach Anspruch 1, worin die Innenwand des Behälters (1) so ausgebildet ist, dass der Innendurchmesser des Behälters zum Boden des Behälters graduell abnimmt.

3. Pneumatischer Behälter für Pulver mit ferngesteuertem Deckel nach Anspruch 2, worin eine Vielzahl der verschiebefesten Ringe (23) in der Längsrichtung des Deckels (2) ausgebildet sind, so dass der untere verschiebefeste Ring an der Innenwand des Behälters (1) stärker anliegt.

4. Pneumatischer Behälter für Pulver mit ferngesteuertem Deckel nach Anspruch 1, worin der Behälter (1) und der Deckel (2) beide aus einem brennbaren Material gebildet sind, so dass sie verbrannt werden können.

## Revendications

1. Récipient pneumatique du type à couvercle télécommandé pour de la poudre comprenant un récipient (1) muni d'une ouverture pour stocker la poudre et un couvercle (2) qui doit être ajusté dans l'ouverture ; **caractérisé en ce que**
un bord supérieur (21) s'étendant dans la direction circonférentielle, une bague fixe (22) pour maintenir le couvercle à une position prédéterminée du récipient, et au moins une bague non-glissante (23) contactant la paroi intérieure de l'ouverture sont formés dans cet ordre sur la paroi périphérique externe du couvercle (2) en commençant à partir du haut de sa paroi périphérique externe,
une rainure de capture (11) ajustée à la bague fixe (22) du couvercle est formée sur la paroi intérieure de l'ouverture du récipient (1), et
un débattement prédéterminé est formé entre le bord d'extrémité (12) de l'ouverture et le bord supérieur (21) du couvercle tandis que la bague fixe (22) du couvercle est ajustée à la rainure de capture (11).

2. Récipient pneumatique du type à couvercle télécommandé pour de la poudre selon la revendication 1, dans lequel la paroi intérieure du récipient (1) est formée de sorte que le diamètre intérieur du récipient diminue progressivement vers le fond du récipient.

3. Récipient pneumatique du type à couvercle télécommandé pour de la poudre selon la revendication 2, dans lequel une pluralité de bagues non-glissantes (23) sont formées dans la direction longitudinale du couvercle (2) de sorte que la bague non-glissante inférieure contacte plus la paroi intérieure du récipient (1).

4. Récipient pneumatique du type à couvercle télécommandé pour de la poudre selon la revendication 1, dans lequel le récipient (1) et le couvercle (2) sont tous les deux constitués d'un matériau inflammable de sorte qu'ils peuvent être incinérés.
